# EUROPEAN PATENT APPLICATION

(11) **EP 4 599 684 A1**
(43) Date of publication of application: **13.08.2025**
(21) Application number: 25155619.7
(22) Date of filing: 03.02.2025
(51) Int. Cl.: A23G 1/18, A23G 3/02

(54) **TANK FOR FOOD PRODUCTS**

(30) Priority: 06.02.2024 IT 202400002470
(71) Applicant: Piovan S.P.A., 30036 Santa Maria di Sala (VE) (IT)
(72) Inventor: ZUPPICHIN, Filippo, 35031 Abano Terme (PD) (IT)
(74) Representative: Luppi Intellectual Property S.r.l.

(57) **Abstract**

Herein described is a tank for containing a food product which melts at a temperature below 90 °C, for example chocolate, or cocoa, or semi-finished cocoa products, wherein the tank comprises wall means which are heated by means of an induction device for maintaining the food product in the molten state, and wherein the induction device is feedback regulated to maintain at least one temperature detected in the tank at a desired value.

## Description

### Background of the invention

The invention relates to a tank for containing food products, in particular in the creamy or semi-liquid state, such as dark chocolate or other types of chocolate, cocoa or semi-finished cocoa products, chocolate or cocoa-based creams, fats, cow butter or other types of butter, vegetable oils, soy lecithin, hazelnut cream, sauces, purees, creams for fillings, pastry creams, or creams in general, condiments or sauces for the food industry, in particular confectionery.

Specifically but not exclusively, the invention can be used for containing food products (raw materials or semi-finished products) in the creamy or semi-liquid state, in particular with a melting point below 90 °C, so as to maintain the food product at a temperature above an ambient temperature to process in the molten state (creamy or semi-liquid in general) food products that are solid at ambient temperature, or to reduce the viscosity of food products which are already in the molten state (creamy or semi-liquid in general) at ambient temperature so as to facilitate the processing of the products.

In the food industry, in order to contain a food product in the creamy or semi-liquid state, it is known to maintain the food product in the molten state and with low viscosity in a tank by heating the tank.

The heating should be carried out in a controlled manner so as to prevent the temperature of the food product, on the one hand, from nearing the solidification point, or leading to an excessive increase in the viscosity of the product, losing the desired fluidity for an appropriate processing in the container, and, on the other hand, from reaching an excessive temperature which could degrade or damage the product.

To this end, it is known to maintain the temperature of the tank at a desired value by means of water at controlled temperature in an interspace outside the tank.

The water can be directly in contact with an outer surface of the tank, or by interposing a separation jacket arranged between the outer surface and the water at controlled temperature (with lower thermal efficiency but with a lower risk of contaminating the product).

Generally, the tempered water is produced in a thermal plant and from here it is distributed towards the areas of use with a hydraulic network. This known temperature control system is rather complex and expensive.

### Summary of the invention

An object of the invention is to provide a solution capable of overcoming one or more of the limits and drawbacks of the prior art mentioned above.

An object is to provide an alternative tank with respect to those of the prior art for containing a food product, in particular a food product in the creamy or semi-liquid state and/or a food product (for example chocolate, cocoa and semi-finished cocoa products, creams, butter, etcetera) which solidifies at ambient temperature or which has a high viscosity at ambient temperature.

An object is to provide a tank capable of ensuring both the fluidity of the food product appropriate for processing the product, and preserving the wholeness and quality of the food product.

An advantage is to provide a tank that allows to carry out a precise and efficient control of the temperature of the food product contained therein.

An advantage is to provide a solution for containing a food product in the creamy or semi-liquid state at a controlled temperature in a tank, with a relatively low thermal dispersion.

These and other objects are attained by a tank according to one or more of claims reported below.

In an example, a tank for containing a food product comprises wall means and an induction device for heating wall means so as to maintain the food product in the molten state (creamy or semi-liquid), wherein the induction device is feedback regulated to maintain at least one temperature detected by sensor means at a desired value, in particular a value below 90 °C and/or above an ambient temperature and/or not below a melting temperature of said food product.

### Brief description of the drawings

The invention will be clearer and implemented with reference to the to the attached drawings which show an exemplifying and non-limiting embodiment thereof, wherein:

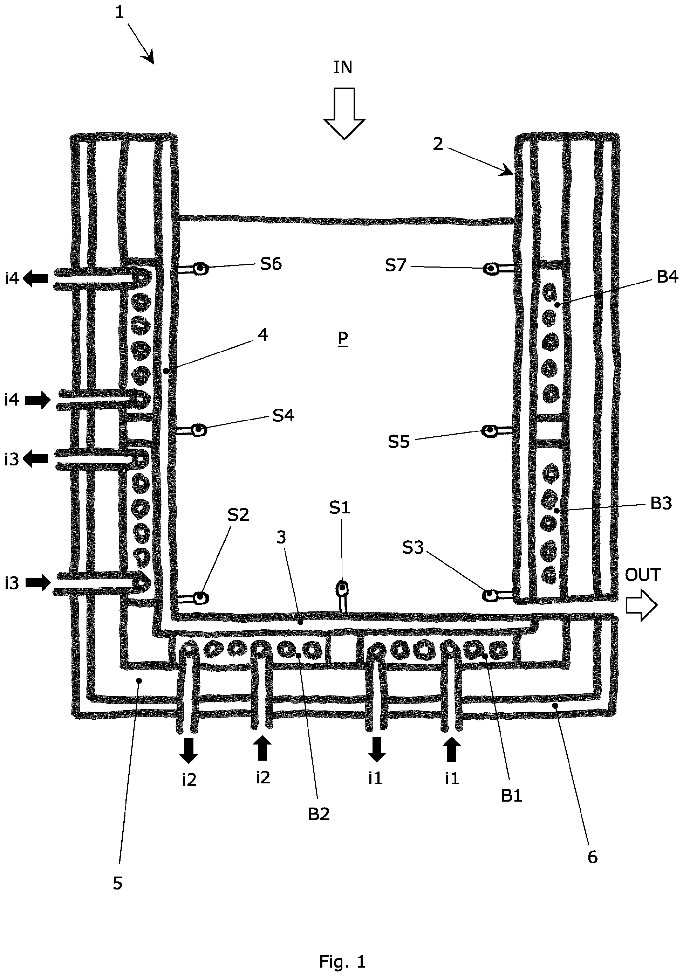

Figure 1 is a diagram of an example of a tank for containing food products obtained according to the present invention.

### Detailed description

With reference to figure mentioned above, a tank for food products is indicated in its entirety with 1.

The tank 1 may be used, in particular, for containing a food product P in the creamy or semi-liquid state. The food product P may in particular be a product which, at ambient temperature, is in solid state or in a fluid or semi-fluid state with a high viscosity which makes the processing thereof complex. The food product P may in particular be a product which melts at a temperature below 90 °C.

The food product P may in particular comprise a product selected from a group of products which includes: dark chocolate, milk chocolate, white chocolate or other types of chocolate, cocoa or semi-finished cocoa products, chocolate or cocoa-based creams, fats, cow butter or other types of butter, vegetable oils, soy lecithin, hazelnut cream, sauces, purees, creams for fillings, pastry creams, or creams in general, condiments or sauces for the food industry, in particular confectionery.

In the specific example described herein, the food product P contained in the tank 1 is dark chocolate (with melting temperature comprised between about 50 and 55 °C), or milk chocolate (with melting temperature comprised between 45 and 50 °C), or white chocolate (with melting temperature comprised between 40 and 45 °C).

The tank 1 comprises a container 2 with wall means configured for containing the food product P. The wall means may in particular be configured for contact with the food product P. The wall means may in particular define a volume for containing the food product P.

The wall means may in particular comprise a bottom wall 3 and a side wall 4.

The wall means may in particular comprise an inlet IN so as to allow the introduction of the food product P and an outlet OUT so as to allow the evacuation of the food product P. The outlet OUT may be located, in particular, close to or at a bottom of the container 2 and/or at a lower level than a level at which the inlet IN is located.

The tank 1 comprises an induction device configured for the inductive heating of the wall means.

The induction device in particular serves to maintain the food product in the molten state inside the tank 1.

The induction device may in particular comprise two or more induction coils. In this specific example, the induction device comprises four induction coils B 1, B2, B3, B4.

The induction device may in particular comprise at least one flat induction coil B1, B2 arranged beneath the bottom wall 3 of the wall means.

The induction device may comprise, like in this specific example, at least two flat induction coils B 1, B2 arranged beside each other below the bottom wall 3 of the wall means.

The induction device may in particular comprise at least one tubular induction coil B3, B4 arranged outside the side wall 4 of the wall means.

The induction device may comprise, like in this specific example, at least two tubular induction coils B3, B4 arranged one on the other outside the side wall 4 of the wall means.

The tank 1 comprises sensor means arranged for measuring at least one temperature or the wall means or a temperature detected in the proximity of the wall means.

The sensor means may in particular comprise two or more sensors arranged spaced apart from each other. In this specific example, the sensor means comprise seven sensors S1, S2, S3, S4, S5, S6, S7.

Each sensor S1-S7 may in particular be arranged to detect at least one temperature of the wall means or inside the wall means.

Each sensor S1-S7 may in particular comprise a temperature transducer, for example, of the resistor type, or of the thermographic type, or of the thermocouple type, or of another type.

Each sensor S1-S7 may in particular be spaced apart from another sensor in a horizontal direction (or in the direction of a width of the containment volume defined by the wall means), and/or in a vertical direction (or in the direction of a height of the containment volume defined by the wall means).

In the specific example, in where there is provided for the use of at least three sensors, each sensor is spaced from at least another sensor in a horizontal direction and from at least one further sensor in a vertical direction.

The tank comprises control means (electronic or programmable, for example a computer, in particular a PLC) configured to feedback regulate the induction device based on signals emitted by the sensor means.

The control means (not shown) may in particular be configured to feedback regulate the induction coils B1-B4 independently of each other.

The control means may in particular be configured to feedback regulate the induction device based on signals emitted by the sensors S1-S7.

The control means may in particular be configured to carry out a feedback control of the induction device by regulating a frequency of an alternating current, or through a pulse regulation (that is by periodically activating and deactivating the magnetic field, with a width and/or frequency modulation of the pulses), or by combining the two regulation methods mentioned above, or with other methods.

Each induction coil B 1-B4 may in particular be operatively associated with at least one of the sensors S1-S7.

The control means may in particular be configured to feedback regulate each induction coil B1-B4 so as to maintain the temperature measured by a respective sensor S1-S7 (operatively associated with the reel) at a desired value.

The desired value mentioned above may in particular be a value above an ambient temperature and/or a value below 90 °C and/or a value not below a melting temperature of the food product.

The wall means may be built so as to have, in particular, a relatively very low magnetism, that is so as to be substantially non-ferromagnetic.

In particular, the wall means may have a relative magnetic permeability µr ≤ 10, or µr ≤ 8, or µr ≤ 6, or µr ≤ 4, or µr ≤ 2, considering that this relative magnetic permeability µr is measured with a magnetizing field H = 200 A/m and a temperature of the wall means of 40 °C.

The wall means may be made of, in particular (like in this example), an austenitic stainless steel, for example AISI 304, or any other material that is suitable for contact with food products and which has a relatively low magnetic permeability.

Each induction coil of the induction device may be directly arranged outside the wall means with low magnetic permeability, that is without interposing a layer of material with greater magnetic permeability (for example, a ferromagnetic layer), given that it was observed that this allows an easier and more reliable control of the temperature of the food product.

The tank 1 may in particular comprise a thermal insulating layer 5 arranged around the wall means so that at least one part of the induction device is interposed between the thermal insulating layer 5 and the wall means. The thermal insulating layer 5 may be made of non-magnetic material.

The tank 1 may in particular comprise a casing 6 which at least partially encloses wall means and the induction device. The casing 6 may in particular be made of non-magnetic material.

The tank 1 may in particular be included in a plant (not shown) for processing the food product which may in particular comprise a supply device configured to convey the food product to the tank and an evacuation device for picking up the food product from the tank.

The tank 1 may in particular be provided with mixing means (not shown, for example, mechanical means, with agitator blades) for mixing (for example continuously) the food product contained in the tank 1.

The control means may in particular be configured to feedback regulate the induction coils B1-B4 independently of each other, so that the temperature detected by the various sensors S1-S7, for each temperature detection point, is maintained at a desired value.

In particular, it may be provided for that the induction device comprises electricity generation means configured so that, for each induction coil B1-B4, there is generated an alternating current i1, i2, i3, i4, which flows in the conductor of the respective induction coil B 1, B2, B3, B4, and which creates, for each induction coil B1-B4, a respective variable magnetic field which induces a heating (which will depend on the intensity of the variable magnetic field) of the portion of the wall means associated with the respective induction coil B1-B4 and affected by the respective variable magnetic field.

Each alternating current i1-i4 may in particular be controlled independently from the others, therefore the various alternating current values i1-i4 in the induction coils B1-B4 may be different from each other and the heating provided may therefore be different for each portion of the wall means.

The induction device is feedback regulated, based on the temperature measurement carried out by the sensor means, so as to maintain each detected temperature at a desired value (for example, a value below 90 °C and not below a melting temperature of the food product).

The temperature measured in a plurality of detection points spaced apart from each other in the tank 1.

The temperature detection points may in particular be, spaced apart from each other in the horizontal direction and/or in the vertical direction.

The induction device may in particular be feedback regulated to maintain each of the detected temperatures at a desired value (for example, the same value for all detection points, in particular a value below 90 °C and not below a melting temperature of the food product). This desired value may in particular be above an ambient temperature.

The induction device, may comprise, as observed above, a plurality of induction coils B1-B4 which may be regulated independently of each other, so that the heat supplied to each portion of the wall means may be different from one portion to the other portion, with the aim of ensuring an effective and safe (in particular even) control of the temperature desired in the entire containment volume defined by the wall means and therefore ensure that the food product is maintained at a temperature which is simultaneously suitable for the fluidity of the product and safe for the wholeness of the product.

As mentioned, the desired temperature value may be below 90 °C. However, it may be provided for that the desired temperature value be below 80 °C, or below 70 °C, or below 60 °C, or below 55 °C.

The desired temperature value may in particular be above an ambient temperature and/or not below a melting temperature of the food product. The desired temperature value may in particular be above 35 °C, or above 40 °C.

The food products contained in the tank 1 may comprise products of various kind, in particular products with a viscosity (considered at 45 °C) comprised between 100 and 8000 mPa*s.

More particularly, the food products may have a viscosity (at 45 °C) comprised between 1600 and 8000 mPa*s, or comprised between 2500 and 6000 mPa*s, or comprised between 2500 and 8000 mPa*s, or comprised between 1600 and 6000 mPa*s.

It was observed that the induction device (which may comprise one or more induction coils B1-B4 arranged outside the wall means) allows to substantially eliminate the risk of contamination of the food product.

Furthermore, a rather regular and even regulation of the temperature can be obtained for the entire containment volume.

As mentioned, the wall means may be obtained with a low magnetic permeability material (for example, austenitic steel), without having to provide a coating layer made of ferromagnetic material applied on an outer surface of the wall means to increase the magnetic properties thereof.

However, there can be provided for a tank, not shown, comprising the coating layer made of ferromagnetic material mentioned above.

The characteristics of each variable electromagnetic field generated by the induction device may depend on various parameters, such as for example, on the geometric characteristics of the tank 1, on the materials used to provide the tank 1, on the properties of the processed food product, etcetera).

The intensity of each electromagnetic field generated by the induction device may however depend on the desired temperature(s) that will be set in the control step.

## Claims

1. Food product tank, comprising a vessel (2) with wall means (3; 4) configured for containment of, and contact with, a food product (P), an induction device (B1-B4) for the inductive heating of said wall means, sensor means (S1-S7) for measuring at least one temperature of said wall means (3; 4) or in the vicinity of said wall means (3; 4), and control means configured to feedback regulate said induction device (B1-B4) based on signals emitted by said sensor means (S1-S7).

2. Tank according to claim 1, wherein said induction device comprises two or more induction coils (B1-B4) and wherein said control means are configured to feedback regulate said two or more induction coils (B1-B4) independently of each other.

3. Tank according to claim 1 or 2, wherein said sensor means comprise two or more sensors (S1-S7) arranged spaced apart from each other and wherein said control means are configured to feedback regulate said induction device (B1-B4) based on signals emitted by said two or more sensors (S1-S7).

4. Tank according to claims 3 and 2, wherein each of said two or more induction coils (B 1-B4) is operatively associated with at least one respective sensor and wherein said control means are configured to feedback regulate each induction coil (B1-B4) to maintain the temperature measured by said at least one respective sensor at a desired value, in particular a value below 90 °C and not below a melting temperature of the food product.

5. Tank according to any one of the preceding claims, wherein said induction device comprises at least one flat induction coil (B1; B2) arranged below a bottom wall (3) of said wall means.

6. Tank according to any one of the preceding claims, wherein said induction device comprises at least one tubular induction coil (B3; B4) arranged outside a side wall (4) of said wall means.

7. Tank according to any one of the preceding claims, wherein said wall means (3; 4) has a relative magnetic permeability µr ≤ 10, or µr ≤ 8, or µr ≤ 6, or µr ≤ 4, or µr ≤ 2, considering that said relative magnetic permeability µr is measured with a magnetizing field H = 200 A/m and a temperature of said wall means (3; 4) of 40 °C.

8. Tank according to claim 7, wherein said wall means (3; 4) is made of austenitic stainless steel, for example AISI 304.

9. Tank according to any one of the preceding claims, comprising a thermal insulating layer (5) arranged around said wall means (3; 4) so that at least a part of said induction device is interposed between said thermal insulating layer (5) and said wall means (3; 4).

10. Tank according to any one of the preceding claims, comprising a casing (6) made of non-magnetic material which at least partially encloses said wall means (3; 4) and said induction device (B 1-B4).

11. Tank according to any one of the preceding claims, wherein said wall means comprises at least one inlet (IN) to allow the introduction of the food product (P) and at least one outlet (OUT) to allow the evacuation of the food product (P); said at least one outlet (OUT) being arranged, in particular, at a lower level than said at least one inlet (IN).

12. Tank according to any one of the preceding claims, comprising mixing means for mixing the food product (P) in the tank (1).

13. Use of a tank (1) according to any one of the preceding claims for containing a food product (P), in particular a food product (P) in the creamy or semi-liquid state and/or a food product (P) which melts at a temperature below 90 °C.

14. Use of a tank (1) according to claim 13, wherein said food product (P) comprises a product selected from a group of products which includes: dark chocolate, milk chocolate, white chocolate or other types of chocolate, cocoa or semi-finished cocoa products, chocolate-based creams, fats, cow butter or other types of butter, vegetable oils, soy lecithin, hazelnut cream.

15. Use of a tank (1) according to claim 13 or 14, wherein said food product (P) comprises a product selected from a group of products which includes: sauces, purees, creams for fillings, pastry creams, or creams in general, condiments or sauces for the food industry, in particular confectionery.
